# FASCICULE DE BREVET EUROPEEN

(11) **EP 1 944 229 B1**
(45) Date de publication et mention de la délivrance du brevet: **14.07.2010**
(21) Numéro de dépôt: 06755346.1
(22) Date de dépôt: 18.05.2006
(51) Int. Cl.: B62K 19/06, B62K 3/14

(54) **STRUCTURE ARRIERE DE CADRE DE BICYCLETTE**
HINTERE FAHRRADRAHMENSTRUKTUR
REAR BICYCLE FRAME STRUCTURE

(30) Priorité: 25.10.2005 ES 200502595
(43) Date de publication de la demande: 16.07.2008
(73) Titulaire: Orbea, S. Coop. Ltda., 48269 Mallabia (Vizcaya) (ES)
(72) Inventeur: NARBAIZA GÓMEZ, Xabier, 20600 Eibar (Gipuzkoa) (ES)
(74) Mandataire: Urizar Barandiaran, Miguel Angel
(86) Numéro de dépôt international: PCT/ES2006/000259
(87) Numéro de publication internationale: WO 2007/048860

(56) Documents cités:
- EP-A- 0 669 247
- BE-A- 417 427
- CH-A5- 690 676
- DE-A1- 3 143 265
- FR-A1- 2 745 782
- US-A- 4 427 209
- US-A1- 2004 145 148

## Description

Tout le long de l'histoire de la bicyclette, l'un des objectifs de tout fabricant de modèles offrant d'excellentes prestations, a été l'optimisation du rapport rigidité/poids. Autrement dit, l'obtention du maximum de rigidité avec le minimum de poids.

La minimisation du poids répond à la nécessité de réduire au maximum la masse que le cycliste devra faire monter dans les dénivellations positives et de faciliter les accélérations, car une masse plus petite donne lieu à de plus grandes accélérations sous la même Force appliquée (F=m*a).

Cependant, dans la recherche du poids minimum, la rigidité du cadre a fréquemment été négligée. Propriété essentielle au moment d'assurer le contrôle et la stabilité du véhicule, mais aussi pour l'utilisation de l'énergie du cycliste. Autrement dit, un cadre qui, en raison d'une rigidité insuffisante, subit des déformations sous l'application des forces de pédalage du cycliste, suppose un gaspillage de l'énergie totale appliquée. Cette perte d'énergie est proportionnelle au carré de la déformation de la structure (Énergie ½ * Rigidité structure*Déformation²).

De cette manière, il est clair que pour optimiser le rendement d'une bicyclette, il ne suffit pas d'en réduire le poids, mais aussi maintenir, en même temps, des niveaux de rigidités élevés.

Après de nombreux calculs théoriques et diverses études, le demandeur a constaté que :
1.- Le manque de rigidité des cadres se manifeste, pour une grande part, en pédalant en danseuse (escalades, sprints,...), car la bicyclette a tendance à se balancer de gauche à droite. L'existence de forces latérales, dans ces cas, provoque les plus grandes déformations d'utilisation.
2.- La minimisation de ces déformations est obtenue grâce à l'amélioration de la rigidité latérale et torsionnelle (par rapport à l'axe longitudinal du cadre) de la bicyclette.
3.- L'amélioration de ces rigidités donne lieu, à son tour, à une plus grande précision dans la conduite, ainsi qu'a une stabilité supérieure.
4.- Les points critiques de la structure sont situés dans le tube diagonal et le triangle arrière.

D'un autre côté, il convient de signaler l'importance du chapitre confort, en entendant comme tel l'absorption des vibrations transmises du sol au cycliste, qui ont, la plupart du temps, un caractère vertical. Cet aspect a également été étudié et optimisé dans la configuration de la structure arrière du cadre de bicyclette qui fait l'objet de l'invention.

Une caractéristique qui est en train d'acquérir une certaine importance dans ce domaine, consiste dans l'absorption des irrégularités du terrain et de diverses vibrations généralement verticales. La solution habituelle pour ce problème consiste à adopter des systèmes complexes de suspension arrière, constitués par des mécanismes et des amortisseurs ayant de multiples configurations.

Une autre solution connue est divulguée dans le document BE-A-417427.

Dans la solution proposée pour la construction de la partie arrière du cadre de bicyclette selon l'objet de l'invention, outre qu'elle fournit une rigidité élevée, permet une absorption supérieure à celle d'un triangle classique, grâce à l'inclusion d'un sommet supplémentaire dans la structure arrière, qui facilite, à son tour, de petites flexions verticales qui accroissent le confort de l'utilisateur en marche.

Une fois que le travail d'optimisation du tube diagonal a été exécuté, les travaux de rigidification se concentrent sur la partie arrière des cadres de bicyclette. C'est sur cet aspect que se base la demande de Brevet.

Historiquement, la partie arrière des cadres de bicyclette a été résolue grâce à la réalisation d'un triangle arrière double constitué des trois sommets classiques : l'axe de pédalier, l'axe arrière et l'assemblage tube supérieur-tube selle. Il est évident que la roue arrière sera comprise entre les deux structures triangulaires.

Le fondement de cette nouvelle demande est basé sur la rupture de ce triangle au moyen de l'insertion d'un nouveau sommet. De cette manière, on forme un quadrilatère dont les prestations structurelles sont supérieures aux formes triangulaires classiques.

Cette amélioration des prestations est déterminée par l'augmentation de l'écart entre les bases et les entretoises, ce qui permet un accroissement proportionnel de la rigidité de la partie arrière, qui est donnée par le plus grand moment d'inertie du quadrilatère par rapport au triangle.

À poids égal, le quadrilatère possède un plus grand moment d'inertie par rapport aux axes "z" et "y", de sorte qu'il subira moins de déformations face à des forces latérales (sens x) et de torsion (sens "y") respectivement. Ceci se traduira par une plus grande utilisation de l'énergie du cycliste.

La structure arrière du cadre de bicyclette qui fait l'objet de l'invention étant de celles constituées par deux triangles arrière, qui comprennent une structure tubulaire commune, qui fait partie du cadre avant, une entretoise supérieure et une entretoise inférieure, se caractérisant par le fait que l'assemblage de l'entretoise supérieure et et de l'entretoise inférieure s'effectue au moyen d'un quatrième côté, formant ainsi un quadrilatère.

Sont comprises dans l'objet de l'invention toutes les réalisations pratiques qui n'altèrent, ne changent ou ne modifient pas le caractère essentiel proposé et notamment :
a) que le quatrième côté soit essentiellement droit;
b) que les sommets soient essentiellement définis par les coordonnées suivantes :

| | |
|---|---|
| V1 | x:126/y:420 |
| V2 | x:410/ y:70 |
| V3 | x:340 / y:22 |
| V4 | x:0 / y:0 |

ou qu'ils soient définis par des coordonnées dépassant ou n'atteignant pas la marge de variation des tolérances mentionnées.

Pour mieux comprendre l'objet de la présente invention, on représente sur les plans une forme préférentielle de réalisation pratique, susceptible de changements accessoires qui n'en dénaturent pas le fondement.

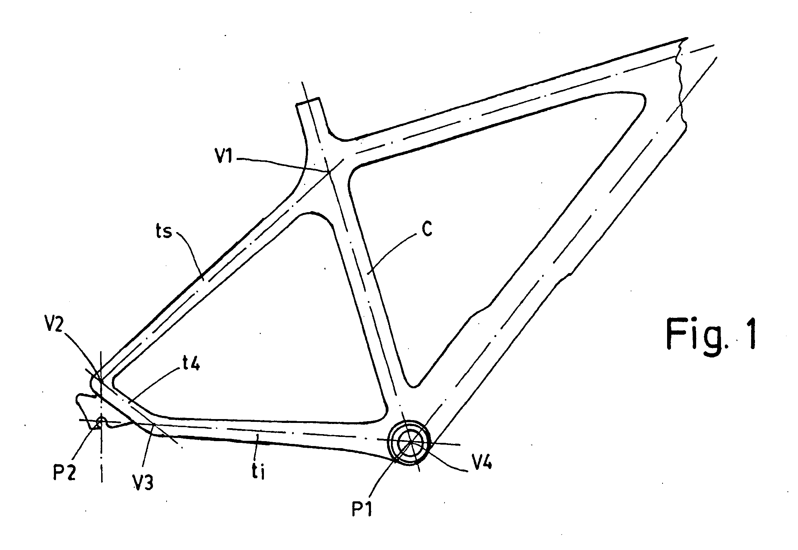

La figure 1 représente une vue générale schématique de profil en long d'un cadre de bicyclette qui comprend la structure arrière selon l'invention.

On décrit ci-dessous un exemple de réalisation pratique, non limitative, de la présente invention.

Un cadre de bicyclette conventionnelle se compose d'un cadre avant et de deux triangles arrière se prolongeant par une structure tubulaire commune (C) où sont disposés coaxialement, suivant leur axe longitudinal, l'axe du pédalier et l'assemblage tube supérieur/tube selle.

Selon l'invention, l'assemblage entre l'entretoise supérieure (ts) et l'entretoise inférieure (ti) qui, en partant du tubulaire commun (C) font partie du triangle arrière, s'effectue au moyen d'une quatrième entretoise (t4) formant ainsi un quadrilatère.

Ce quadrilatère est constitué par ledit tubulaire commun (C) et lesdites entretoises (ts), (ti), (t4) et parfaitement défini par les coordonnées de ses sommets (V1), (V2), (V3), (V4).

Ladite entretoise (t4), ou n'importe laquelle des entretoises (ts), (ti) et/ou le tubulaire commun (C) sont essentiellement droits.

Si l'on place un système de coordonnées cartésien sur l'axe du pédalier, la position de chaque sommet (V1), (V2), (V3), (V4) sera essentiellement la suivante:

| | |
|---|---|
| V1 | x:126 / y:420 |
| V2 | x:410 / y:70 |
| V3 | x:340 / y:22 |
| V4 | x:0 / y:0 |

L'axe arrière (P2) portant la roue arrière de la bicyclette est disposé sur le quatrième côté (t4) du quadrilatère formé -voir figure 1-.

## Revendications

1. Structure arrière d'un cadre de bicyclette, de celles constituées par deux triangles arrières avec cotés essentiellement rectilignes, qui comprennent une structure tubulaire (C) commune faisant partie du cadre avant, une entretoise supérieure (ts) et une entretoise inférieure (ti); **se caractérisant par le fait que** l'assemblage de l'entretoise supérieure (ts) et de l'entretoise inférieure (ti) s'effectue au moyen d'un quatrième côté (t4), formant un quadrilatère, dont les sommets sont définis essentiellement par les coordonnées suivantes:
| | |
|---|---|
| V1 | x:126 / y:420 |
| V2 | x:410 / y:70 |
| V3 | x:340 / y:22 |
| V4 | x:0 / y:0 |
de sorte que la structure puisse fléchir vers le quatrième côté (t4), facilitant ainsi de petites flexions verticales qui augmentent le confort du cycliste en marche.

## Claims

1. Rear bicycle frame structure of the kind comprised of two rear triangles composed by basically rectilinear sides that make up a common tubular structure (C) that forms part of the front frame, an upper tie bolt (ts) and a lower tie bolt (ti); **characterised** because the upper tie bolt (ts) and the lower tie bolt (ti) are joined by means of a fourth side (t4) forming a four-sided piece, whose vertices are defined basically by the following coordinates:
| | |
|---|---|
| V1 | x:126/y:420 |
| V2 | x:410 / y:70 |
| V3 | x:340 / y:22 |
| V4 | x:0 / y:0 |
so that the structure can bend towards the fourth side (t4) facilitating slight vertical bending that increases the cyclist's comfort when riding.

## Patentansprüche

1. Hintere Fahrradrahmenstruktur der Art, die aus zwei hinteren Dreiecken mit grundsätzlich geradlinigen Seiten besteht, welche aus einer gemeinsamen Röhrenstruktur (C) aufgebaut sind, die Teil des Vorderrahmens ist und eine obere Strebe (ts) und untere Strebe (ti) besitzt; sie kennzeichnet sich **dadurch**, dass die Verbindung der oberen Strebe (ts) mit der unteren Strebe (ti) anhand einer vierten Seite (t4) erfolgt und ein Viereck bildet, dessen Scheitel grundsätzlich durch folgende Koordinaten definiert sind,
| | |
|---|---|
| V1 | x:126 / y:420 |
| V2 | x:410 / y:70 |
| V3 | x:340 / y:22 |
| V4 | x:0 / y:0 |
sodass sich die Struktur in Richtung der vierten Seite (t4) durchbiegen kann, indem kleine senkrechte Durchbiegungen ermöglicht werden, die den Komfort des Radfahrers beim Fahren erhöhen.
